# EUROPEAN PATENT APPLICATION

(11) **EP 1 344 447 A1**
(43) Date of publication of application: **17.09.2003**
(21) Application number: 03075357.8
(22) Date of filing: 06.02.2003
(51) Int. Cl.: A01D 78/10, A01B 73/04

(54) **An agricultural device**

(30) Priority: 11.03.2002 NL 1020147
(71) Applicant: Lely Enterprises AG, 6300 ZUG (CH)
(72) Inventor: Koorn, Maarten, 3123 CP Schiedam (NL)
(74) Representative: Corten, Maurice Jean F.M.

(57) **Abstract**

The invention relates to an agricultural device, in particular a hay-making device, provided with a frame (3), which frame (3) is supported on the ground by a frame-supporting member, and provided with at least one working element (4) for performing an agricultural operation, such as raking crop lying on the soil, which working element (4) can be brought into a working position and into a transport position, the arrangement being such that, in the working position, the working element (4) is in engagement with an operation-supporting member (5) for its support on the ground, and, in the transport position, the working element (4) is not in engagement with the operation-supporting member (5).

## Description

The invention relates to an agricultural device according to the preamble of claim 1.

Such an agricultural device is known from German Gebrauchsmuster DE-299 03 553. This document discloses a hay-making device in the form of a swath-forming device with a circular working element for raking crop. The working element rotates about a vertical axis and is, in the normal course of events, undetachably connected as a whole to a carrier frame by means of an arm. The carrier frame is supported on the ground by means of two big transport wheels. To the outer circumference of the working element there are fastened tines that guide the crop lying on the soil towards the carrier frame when the working element is in rotation. The drive of the working element takes place via an axis that is parallel to the arm. The working element is supported on the ground by means of an operation-supporting member in the form of a wheel set that engages the centre of the working element. The wheel set comprises a front wheel portion and a rear wheel portion. Seen in the direction of travel, the front wheel portion is located just behind the tines. The rear wheel portion consists of two wheels that are spaced apart and is connected to an elongated carrier portion that extends rearwards from the centre of the working element. Said rear wheel portion is located on the outside of the circumferential path of the working element. The arm is perpendicular to the direction of travel of the machine and can be folded up by means of a folding-up cylinder so as to occupy a smaller width in the transport position, due to the fact that, when the arm is folded up, the working element, along with the wheel set, is also folded up.

A disadvantage of such machines is that the machine is relatively expensive.

The invention aims at providing an agricultural device that is capable of being brought into a transport position and that is relatively cheap, whilst maintaining a construction that is suitable for operation.

For this purpose, an agricultural device of the above-described type according to the invention is characterized by the measures of claim 1. Because, in the transport position, the working element is not in engagement with the operation-supporting member, for bringing the machine out of the working position, only the working element, without the operation-supporting member, has to be displaced. This only requires a simple and cheap construction and a mechanism demanding little force.

An advantageous embodiment is obtained if the frame-supporting member and the operation-supporting member constitute one collective supporting device. In this way, no separate frame-supporting member, such as a separate wheel set for transport, is required, so that a cheap and light construction of the machine is possible.

A further advantageous embodiment is obtained if the operation-supporting member comprises a wheel set for its support on the ground, which wheel set comprises at least one wheel. It is possible to dispose a wheel very close to the working element, so that the working element is capable of following irregularities in the soil in a proper manner.

In another embodiment, the operation-supporting member is connected to the frame by means of an elongated connecting element and the connecting element is orientated rearwards relative to the working element seen in the direction of travel. In general, the working element occupies space transverse to the direction of travel of the machine. Due to this, it frequently occurs that only at the rear side there is space available for the connecting element without a proper working being impeded. This is in particular the case if the working element is a rake wheel of a hay-making device. In this case, only at the rear side the rake tines of the rake wheel are not orientated downwards.

In an embodiment, the working element is drivable and the drive of the working element takes place via the connecting element. This has the advantage that, when the working element is brought into the transport position, no components of the drive have to be lifted along therewith. This contributes to a light construction.

In an embodiment according to the invention, the connecting element can be moved relative to the frame. Due to the fact that the operation-supporting member is flexibly connected to the frame by means of the connecting element, the working element is better capable of following the soil. This results in a better functioning.

A further advantageous embodiment is obtained if the connecting element can be moved in a plane that is at any rate substantially horizontal relative to the ground. In this way it is possible to bring a connecting element into the transport position towards the middle of the agricultural device. The transport width is thus limited.

In a particular embodiment, the frame comprises a frame arm that is connected to the working element, which frame arm can be moved in height relative to the operation-supporting member. The space above an agricultural device is often freely available, so that no additional measures, such as swinging machine components aside, have to be taken for separating the working element from the operation-supporting member.

In a further embodiment, the working element can be brought into the transport position by rotation about a folding-up axis. For folding-up about a folding-up axis a simple construction may suffice. In the simplest case, only an axis and an arm connected thereto are required.

In a preferred embodiment, the folding-up axis is disposed substantially parallel to the direction of travel of the device. The folding-up axis being disposed in this way provides the possibility of causing the folding-up axis to function as an axis about which the working element, in its working position, can freely move in order to follow irregularities in the soil.

It is further advantageous to provide a securing device for securing the working element on the operation-supporting member. In this way the working element is prevented from separating unintentionally from the supporting member because of vibrations and irregularities in the soil.

By making the securing device operable from a tractor that is coupled to the agricultural device, the operator needs not to get off the tractor when bringing the device out of and into the transport position.

In another embodiment according to the invention, there are provided fixing means for transmitting to the operation-supporting member, in the working position, forces that are parallel to the ground surface and that are acting on the working element. By counteracting of the ground and because of the drive torque possibly to be exerted for the drive of the working element, considerable forces may be exerted on the working element, in particular in the direction of travel. By means of this construction, these forces need not to be absorbed by the frame portion, but can be absorbed via the connecting element. Due to this, a relatively cheap and light construction of the frame portion is possible.

In a particular embodiment of the invention, the agricultural device is a hay-making device, in which case the frame is provided with at least one axis of rotation that is at any rate substantially vertical relative to the ground and the working element comprises a rotor that is rotatable about the axis of rotation in the working position, the rotor being provided with hay-making elements defining a circumferential path and the rotor being in engagement with the operation-supporting member within the circumferential path in the working position. A hay-making device is usually provided with a light working element, such as a rake wheel, supported by a relatively heavy wheel set. This construction enables the advantages of the invention to come out well.

The invention will be explained hereinafter in detail with reference to drawings of exemplary embodiments.
Figure 1 is a plan view of a hay-making device according to the invention in its working position;
Figure 2 is a side view of a hay-making device according to the invention in its working position;
Figure 3 is a side view of a hay-making device according to the invention in its transport position;
Figure 4 is a side view of a detail of the invention.

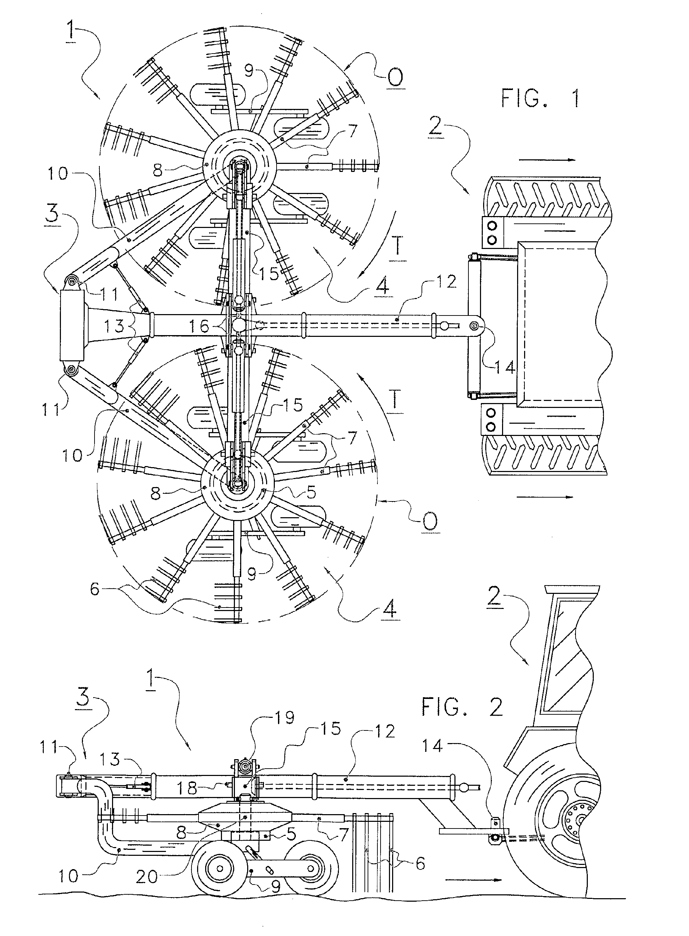

Figure 1 shows a hay-making device 1 constituted by an agricultural device with a frame 3 that is provided with at least one axis of rotation that is at any rate substantially vertical relative to the ground, a working element comprising a rotor 4 that is rotatable about the axis of rotation in the working position, the rotor 4 being provided with hay-making elements defining a circumferential path O and the rotor 4 being in engagement with the operation-supporting member 5 within the circumferential path O in the working position. In the normal course of events, the entire working element is undetachably connected to the remaining part of the agricultural device.

The hay-making device 1 serves to rake crop lying on the soil towards the middle of the device in the direction of the arrow T. The raking movement is performed by rotating sets of rake tines 6. Each set is fastened to a rotor arm 7 of a rotor, which rotor is rotatable about a vertical axis of rotation. Each rotor arm 7 is connected to the rotor housing 8 so as to be rotatable about an axis parallel to the longitudinal axis of the rotor arm 7 over a portion of the circumferential path. A guiding system in the rotor housing 8 causes the position of a rotor arm 7 to change, during the rotation of the rotor 4 about the axis of rotation, from a raking position, in which the tines 6 are orientated downwardly, into a non-raking position, in which the tines 6 are situated in a substantially vertical plane. This is apparent from Figure 2. The rotor housing 8 is supported on the ground by means of a wheel set 9. The wheel set 9 is designed as a double tandem set consisting of a left and a right pair of wheels. Each pair of wheels is tiltable about a tilting-axis perpendicular to the direction of travel and the entire wheel set is tiltable about an axis in the direction of travel. Both axes are situated in a plane parallel to the ground surface. An elongated connecting element 10 connects the wheel set 9 to the frame 3 of the device 1. The connecting element is rotatable about a vertical axis 11. The frame 3 comprises an elongated central frame portion 12 that is fastened via a coupling point 14 so as to be drawn behind a tractor 2. The angle between the connecting element 10 and the central frame portion 12 can be adjusted by means of a hydraulic angle-adjusting cylinder 13. The angle-adjusting cylinder 13 can be connected to the hydraulic system of the tractor 2. The connecting element 10 is disposed such that the rotor arms 7 cross the connecting element 10 at the upper side in the non-raking position.

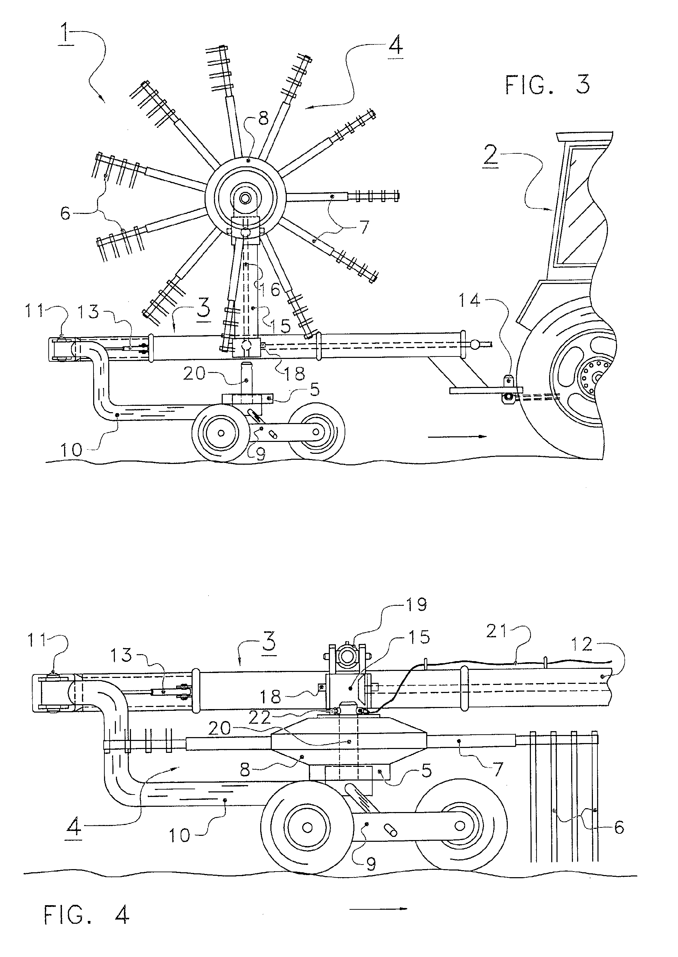

In order to limit the width of the device in the transport position, each of the two rotors 4 can be folded up about a folding-up axis 18, as shown in Figure 3. The folding up takes place by means of a folding-up cylinder 19 that is disposed on the frame arm 15. A bar-shaped fixing element 20 is disposed on the upper side of the operation-supporting member 5. Said fixing element 20 fits in a recess of the rotor housing 8 in the working position. The fixing element 20 absorbs the forces perpendicular to the direction of rotation T. Consequently, the frame arm 15 is not loaded by these forces.

The rotor housing 8 is connected to the central frame portion 12 by means of a frame arm 15. In the described embodiment a rotor 4 is driven via a coupling axis 16 that is disposed in the frame arm.

In Figure 4 said fixing element 20 is shown in detail in the secured working position. When the device is in operation, the wheel set 9 is continuously subject to shocks and vibrations. For a proper functioning and a proper loading of the device 1, the wheel set 9 should remain fixedly connected to the rotor 4. To this end, the fixing element 20 is secured by a pin 22. A spring keeps said pin 22 in the securing position. From the tractor 2, said pin 22 can be brought out of the securing position against spring action by means of a rope construction 21. In a non-shown embodiment, this takes place hydraulically, simultaneously with the activation of the folding-up cylinders 19.

In a non-shown embodiment, the fixing element is omitted. The rotor housing is slidably connected to the operation-supporting member. Due to the fact that the connection of the connecting element to the operation-supporting member is designed as a ball joint, there is obtained a flexible whole enabling the working element to assume different positions relative to the frame.

For bringing the device from the transport position (Figure 3) into the working position (Figure 2), first the two angle-adjusting cylinders 13 are activated, so that the two connecting elements 10 move outwards. Subsequently, the two folding-up cylinders 19 are activated by means of which the two rotors 4 are folded down until they bear on the associated wheel sets 9. The rotor housing 8 will then surround the fixing element 20. Because of the spring action of the securing pin 22, the securing pin 22 will assume automatically the securing position and secure the rotors 4. Only when both rotors 4 have been secured, the device 1 is put into operation by activating the drive of the rotors 4.

## Claims

1. An agricultural device, in particular a hay-making device, provided with a frame (3), which frame (3) is supported on the ground by a frame-supporting member, and provided with at least one working element (4) that is undetachably connected to the frame for performing an agricultural operation, such as raking crop lying on the soil, which working element (4) can be brought into a working position and into a transport position, and which working element (4), in the working position, is in engagement with an operation-supporting member (5) for its support on the ground, **characterized in that**, in the transport position, the working element (4) is not in engagement with the operation-supporting member (5).

2. An agricultural device as claimed in claim 1, **characterized in that** the frame-supporting member and the operation-supporting member (5) constitute one collective supporting device.

3. An agricultural device as claimed in claim 1 or 2, **characterized in that** the operation-supporting member (5) comprises a wheel set (9) for its support on the ground, which wheel set (9) comprises at least one wheel.

4. An agricultural device as claimed in any one of the preceding claims 1 to 3, **characterized in that** the operation-supporting member (5) is connected to the frame (3) by means of an elongated connecting element (10), the connecting element (10) being orientated rearwards relative to the working element (4) seen in the direction of travel.

5. An agricultural device as claimed in claim 4, **characterized in that** the working element (4) can be driven, and **in that** the drive of the working element (4) takes place via the connecting element (10).

6. An agricultural device as claimed in claim 4 or 5, **characterized in that** the connecting element (10) can be moved relative to the frame (3).

7. An agricultural device as claimed in claim 6, **characterized in that** the connecting element (10) can be moved in a plane that is at any rate substantially horizontal relative to the ground.

8. An agricultural device as claimed in any one of the preceding claims, **characterized in that** the frame (3) comprises a frame arm (15) that is connected to the working element (4), which frame arm (15) can be moved in height relative to the operation-supporting member (5).

9. An agricultural device as claimed in claim 8, **characterized in that** the working element (4) can be brought into the transport position by rotation about a folding-up axis (18).

10. An agricultural device as claimed in claim 9, **characterized in that** the folding-up axis (18) is disposed substantially parallel to the direction of travel of the agricultural device.

11. An agricultural device as claimed in any one of the preceding claims, **characterized in that** there are provided fixing means (20) for transmitting to the operation-supporting member (5), in the working position, forces that are parallel to the ground surface and that are acting on the working element (4).

12. An agricultural device as claimed in any one of the preceding claims, **characterized in that** there is provided a securing device for securing the working element (4) on the operation-supporting member (5).

13. An agricultural device as claimed in claim 12, **characterized in that** the securing device can be operated from a tractor (2) that is coupled to the agricultural device.

14. A hay-making device (1) constituted by an agricultural device as claimed in any one of the preceding claims, **characterized in that** the frame (3) is provided with at least one axis of rotation that is at any rate substantially vertical relative to the ground, the working element comprising a rotor (4) that is rotatable about the axis of rotation in the working position, the rotor (4) being provided with hay-making elements (6) defining a circumferential path (O) and the rotor (4) being in engagement with the operation-supporting member (5) within the circumferential path (O) in the working position.
